(19) Europäisches Patentamt
European Patent Office
Office européen des brevets

(11) **EP 4 732 985 A1**

(12) **EUROPEAN PATENT APPLICATION**
published in accordance with Art. 153(4) EPC

(43) Date of publication:
**29.04.2026 Bulletin 2026/18**

(21) Application number: **24872060.9**

(22) Date of filing: **20.09.2024**

(51) International Patent Classification (IPC):
**B23K 26/21** (2014.01)

(52) Cooperative Patent Classification (CPC):
**B23K 26/21**

(86) International application number:
**PCT/JP2024/033590**

(87) International publication number:
**WO 2025/070269 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.09.2023 JP 2023166486**

(71) Applicant: **JFE Steel Corporation
Tokyo, 100-0011 (JP)**

(72) Inventors:
• **TOMITA, Kai
Tokyo 100-0011 (JP)**

• **TANIGUCHI, Koichi
Tokyo 100-0011 (JP)**
• **TSUKAMOTO, Kengo
Tokyo 100-0011 (JP)**
• **HARADA, Yoshimitsu
Tokyo 100-0011 (JP)**
• **NUMAZAWA, Yoshinori
Tokyo 100-0011 (JP)**
• **FUJITA, Noriki
Tokyo 100-0011 (JP)**

(74) Representative: **Hoffmann Eitle
Patent- und Rechtsanwälte PartmbB
Arabellastraße 30
81925 München (DE)**

(54) **BUTT WELDING METHOD**

(57) Provided is a butt welding method capable of, even if weld metal is soft as in the case of a welded portion formed when a high-Ni austenitic or low-carbon ferritic filler wire is used, increasing the strength of the weld metal and preventing fracture at the welded portion during sheet passage through a processing line. Upon butting a trailing end of a preceding steel sheet and a leading end of a succeeding steel sheet at an entry side of the processing line and pressing a solidified welded portion at a butted portion, a pressing force during the pressing is controlled to satisfy $0 \leq H_w - H_1 < 100$, where $H_w$ is hardness of the welded portion after the pressing and $H_1$ is base metal hardness of a steel sheet having lower hardness among the butted steel sheets.

*FIG. 1*

**Description**

TECHNICAL FIELD

The present disclosure relates to a butt welding method of, when passing steel sheets through various processing lines, butting the trailing end of a preceding steel sheet and the leading end of a succeeding steel sheet at the entry side of the processing line and welding the steel sheets by laser welding.

BACKGROUND

In recent years, in the steel industry, it has been common practice for hot rolling lines, pickling lines, cold rolling lines, annealing lines, etc. for producing steel sheets to continuously process steel sheets while uncoiling the steel sheets that have been coiled.

Thus, in production lines for continuously processing steel sheets, the trailing end of a preceding steel sheet and the leading end of a succeeding steel sheet are butted and welded at the entry side of the line in order to continuously pass steel sheets to be processed through the line.

Flash-butt welding or laser welding is often used for such welding of steel sheets. In particular, laser welding is often used for welding of hard steel sheets with low toughness, such as electrical steel sheets and high-strength steel sheets.

With laser welding, however, the welded portion is rapidly cooled after welding, resulting in hardening and thus making it difficult to ensure sufficient toughness. In particular, for steel sheets containing a large amount of C or Si, the brittleness of the welded portion is more noticeable when the content of C or Si is higher.

Therefore, the welded portion resulting from laser-welding steel sheets containing a large amount of C or Si is prone to fracture during sheet passage through a continuous processing line. When steel sheets fracture during sheet passage through the processing line, recovery takes a long time, causing significant reduction in the ratio of utilization and productivity.

Moreover, for example in rolling mills, the rolls may be damaged, requiring roll replacement. This not only decreases productivity but also increases maintenance costs.

Accordingly, filler wires with a low alloy content have conventionally been used for welding steel sheets with a high alloy content. For example, low-carbon ferritic filler wires or high-Ni austenitic filler wires, such as YGW12Y (C: approximately 0.08 mass%, Si: approximately 0.5 mass%) specified in JIS Z 3312 (2009) or SNI6625 (Si: approximately 0.29 mass%, Ni: approximately 61.3 mass%) specified in JIS Z 3334 (2017), have been supplied.

Such filler wires are intended to dilute the concentrations of C and Si in the weld metal, thereby suppressing the formation of coarse ferrite microstructure or brittle martensite microstructure and preventing embrittlement of the weld metal.

However, if the foregoing high-Ni austenitic or low-carbon ferritic filler wire is used, the weld metal tends to become softer than the steel sheets. In such a case, deformation concentrates in the weld metal during sheet passage through a continuous processing line, causing fracture at the welded portion.

In view of this, Patent Literature (PTL) 1 proposes a technique that, during butt welding while supplying a filler wire, presses the excess weld metal of the weld bead after welding and controls the microstructure of the weld metal formed, thereby obtaining a welded joint with weld metal excellent in toughness.

PTL 2 proposes a technique that uses a pressing device such as a press when pressing the weld bead after welding.

CITATION LIST

Patent Literature

PTL 1: JP 4486639 B2
PTL 2: JP 2948843 B2

SUMMARY

(Technical Problem)

The technique described in PTL 1 presses the laser welded portion in the temperature range of $Ac_1$ to $Ac_3$ to refine

the austenite grain size, thus promoting transformation to ferrite and pearlite and reducing brittle martensite.

Hence, this technique cannot be used for strengthening weld metal that does not undergo phase transformation, such as ferrite single phase or austenite single phase. Even for weld metal that undergoes phase transformation, if there is a concentration distribution of chemical composition in the weld metal, the above-mentioned transformation does not necessarily result in high strength throughout the entire weld metal.

The technique described in PTL 2 removes irregularities in the weld bead to relieve stress concentration in the welded portion and prevent fracture at the welded portion during sheet passage through a continuous processing line. However, if there is a strength difference between the welded portion and the base metal as in the case of a welded portion formed when a high-Ni austenitic or low-carbon ferritic filler wire is used, fracture may occur at the welded portion.

It could therefore be helpful to provide a butt welding method capable of, even if weld metal is soft as in the case of a welded portion formed when a high-Ni austenitic or low-carbon ferritic filler wire is used, increasing the strength of the weld metal and preventing fracture at the welded portion during sheet passage through a continuous processing line.

(Solution to Problem)

Upon careful examination, we discovered the following.

By controlling the pressing force when pressing the welded portion with rolls after the welded portion has solidified such that the hardness of the welded portion after pressing and the base metal hardness of the steel sheet lower in hardness among the butted steel sheets satisfy a predetermined relationship, the strength of the weld metal can be appropriately increased and fracture at the welded portion in a continuous processing line can be suppressed.

We also discovered that, by appropriately pressing the excess weld metal of the weld bead depending on the wire supply amount ratio with respect to the gap at the butted portion between the steel sheets, the strength of the weld metal can be increased and fracture at the welded portion in a continuous processing line can be suppressed more advantageously. Herein, the wire supply amount ratio is the ratio b/a of the supplied volume "b" of the filler wire per unit weld length to the volume "a" of the gap at the butted portion between the steel sheets per unit weld length.

The gap at the butted portion between the steel sheets is hereinafter referred to as "butt gap." The butt gap G means the length of the butt gap, i.e., the distance between the trailing end of the preceding steel sheet and the leading end of the succeeding steel sheet.

We consider that the strength of the weld metal is increased by the following mechanism.

As a result of the weld metal formed by laser welding being pressed under appropriate conditions, processing strain is introduced into the pressed portion, and the strength of the weld metal increases. Regarding the strength difference between the weld metal and the steel sheets, if the butt gap is small, the dilution ratio of the weld metal by the base steel sheets (i.e., the proportion of the base metal composition in the weld metal) is high, and the composition of the weld metal is close to that of the steel sheets, therefore the strength difference is likely to be small. On the other hand, if the butt gap is large, the dilution ratio of the weld metal by the base steel sheets is low, and the composition of the weld metal is close to that of the filler wire, therefore the strength difference is likely to be large.

Therefore, in order to resolve the strength difference, the pressing force for reduction needs to be higher when the butt gap is larger. Moreover, in terms of resolving the strength difference, the volume of the pressed portion becomes larger as the wire supply amount ratio is higher, and accordingly the pressing force for reduction needs to be higher to introduce larger processing strain.

The present disclosure is based on these discoveries. We thus provide:

1. A butt welding method comprising, upon continuously passing a plurality of steel sheets through a processing line, butting a trailing end of a preceding steel sheet and a leading end of a succeeding steel sheet at an entry side of the processing line, then irradiating a butted portion with a laser while supplying a filler wire to the butted portion so as to weld the steel sheets by melting and solidifying the filler wire, and pressing a solidified welded portion, wherein a pressing force during the pressing is controlled to satisfy a relationship of $0 \leq H_w - H_1 < 100$, where $H_w$ is hardness of the welded portion after the pressing and $H_1$ is base metal hardness of a steel sheet having lower hardness among the butted steel sheets.

2. The butt welding method according to 1., wherein the pressing force P [kN] during the pressing satisfies any of the following formulas (1) to (3) depending on a butt gap G [mm] of the butted portion and a wire supply amount ratio X with respect to a gap at the butted portion,

when $0 \leq G < 0.20$,

$$1.1X(1.5G + 2.1) \leq P < 10X(2G + 0.5) \qquad (1)$$

when 0.20 ≤ G < 0.50,

$$1.2 X(2G + 1.8) \leq P < 5X(3G + 1.2) \qquad (2)$$

when 0.50 ≤ G,

$$1.3 X(3G + 1.1) \leq P < 1.2X(3.5G + 9.5) \qquad (3).$$

3. The butt welding method according to 1. or 2., wherein the pressing force P [kN] during the pressing satisfies any of the following formulas (4) to (6) depending on a butt gap G [mm] of the butted portion and a wire supply amount ratio X with respect to a gap at the butted portion,

when 0 ≤ G < 0.20,

$$(1 + X/30) \times (1.5G + 2.5) \leq P < (1 + X/30) \times (15G + 18) \qquad (4)$$

when 0.20 ≤ G < 0.50,

$$(1 + X/20) \times (2G + 2.3) \leq P < (1 + X/20) \times (10G + 18) \qquad (5)$$

when 0.50 ≤ G,

$$(1 + X/10) \times (2.5G + 1.8) \leq P < (1 + X/10) \times (9G + 17) \qquad (6).$$

4. The butt welding method according to any one of 1. to 3., wherein one or both of a ferritic filler wire and an austenitic filler wire are used as the filler wire.

(Advantageous Effect)

It is thus possible to provide a butt welding method capable of, even if weld metal is soft, increasing the strength of the weld metal and preventing fracture at the welded portion during sheet passage through a continuous processing line.

BRIEF DESCRIPTION OF THE DRAWINGS

In the accompanying drawings:

FIG. 1 is a schematic diagram illustrating a laser welding method and a pressing method; and
FIG. 2 is a schematic diagram illustrating hardness measurement points in hardness evaluation for a welded portion.

DETAILED DESCRIPTION

Embodiments of the present disclosure will be described below. The present disclosure is, however, not limited to the following embodiments. In this specification, each numeric value range expressed in the form of "A to B" denotes the range that includes values A and B as its lower and upper limits.

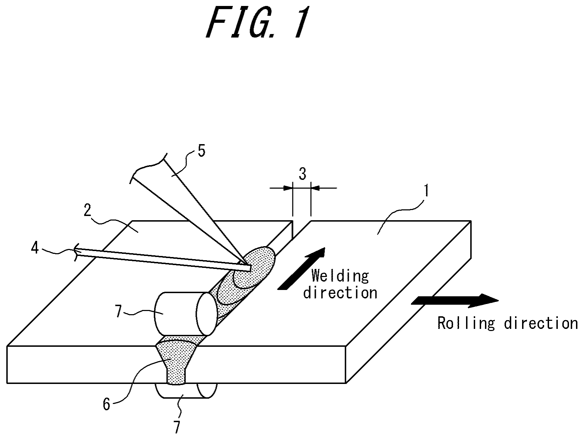

The present disclosure relates to a technique for butt-welded member production. As illustrated in FIG. 1, in butt-welded member production, when passing steel sheets through a continuous processing line, the trailing end of a preceding steel sheet 1 and the leading end of a succeeding steel sheet 2 are butted at the entry side of the line, the butted portion 3 is irradiated with a laser 5 while being supplied with a filler wire 4 to melt the steel sheets 1 and 2 and the filler wire 4 at the butted portion 3 and weld the steel sheets, and then a weld bead 6 in a solidified state formed as a result of welding is pressed.

First, the welding device and the like used to implement the present disclosure will be described.

The type of laser used for welding in the present disclosure is not particularly limited, and a fiber laser, disk laser, semiconductor laser, $CO_2$ laser, or the like may be used. The composition and diameter of the filler wire are not particularly limited. However, from the viewpoint of preventing embrittlement of the weld metal forming the weld bead 6, for example, the composition is preferably a ferritic type with low C and Si content or an austenitic type with high Ni content. The type and installation method of shielding gas are not particularly limited, but it is preferable to use He gas in the case of a $CO_2$ laser.

This is because He gas has a higher ionization voltage and is less likely to generate plasma than Ar gas.

The pressing means for the welded portion composed of weld metal is not particularly limited as long as it can satisfy the below-described conditions. As an example, it is preferable to arrange rolls (hereinafter also referred to as "flattening rolls") for flattening the welded portion, such as pressing rolls 7 illustrated in FIG. 1, so as to face the front and back surfaces of the welded portion, and press the weld bead from the upper and lower surfaces of the steel sheets with rotating the flattening rolls in the welding direction.

The steel sheets used in the present disclosure may be either hot-rolled steel sheets or cold-rolled steel sheets, but preferably contain 0.5 mass% or more of Si. To achieve the effects according to the present disclosure more advantageously, it is preferable to use steel sheets containing 2.5 mass% or more of Si, for which fracture at the welded portion is significant. Although no upper limit is placed on the Si content, the Si content is preferably 4.5 mass% or less from the viewpoint of ensuring cold rollability.

The steel sheets used in the present disclosure may contain 0.010 mass% or more of C. Since an increase in C content makes fracture at the welded portion more significant, the C content is more preferably 0.100 mass% or more. Although no upper limit is placed on the C content, the C content is preferably 0.500 mass% or less.

The steel sheets may contain either Si or C, or both Si and C.

The other components (including inevitable impurities) of the steel sheets used in the present disclosure are not particularly limited, and any components of steel sheets to be passed through the below-described continuous processing line and their amounts can be suitably used.

The steel sheets used in the present disclosure preferably have a sheet thickness in the range of 0.8 mm to 6.0 mm. If the sheet thickness is less than 0.8 mm, the amount of the steel sheets melted is small, so that the welded portion may burn through, making it difficult to form a weld bead. If the sheet thickness is more than 6.0 mm, in order to melt the steel sheets through to the back surface, it is necessary to increase the laser power or reduce the welding speed to increase heat input. This may cause a decrease in the toughness of the heat-affected zone (HAZ).

In the present disclosure, the term "processing line" refers to a line for continuously processing the steel sheets described above. In detail, the present disclosure is preferably applied to a continuous processing line where the trailing end of a preceding steel sheet and the leading end of a succeeding steel sheet are laser-welded at the entry side of the line and the welded steel sheets are passed through the line, such as a hot rolling line, pickling line, cold rolling line, cleaning line, continuous annealing line, temper rolling line, and finishing line. In the present disclosure, the term "continuous processing line" includes cases where an operator manually places steel sheets one by one, as long as the trailing end of a preceding steel sheet and the leading end of a succeeding steel sheet are laser-welded at the entry side of the line and the welded steel sheets are passed through the line.

The welding method according to the present disclosure comprises: performing butt welding by laser welding; and pressing the welded portion formed as a result of the laser welding.

Here, if a low-alloy ferritic or high-Ni austenitic filler wire is supplied, the weld metal becomes soft and the strength of the weld metal is likely to decrease excessively as compared with the steel sheets, as mentioned above.

The strength of the weld metal is greatly influenced by the dilution ratio by the base metal. When the butt gap is larger and the wire supply amount ratio is higher, the strength of the weld metal is likely to be lower. Hence, in the present disclosure, it is necessary to adjust the pressing force depending on the butt gap and the wire supply amount ratio in order to improve the strength of the weld metal to be higher than or equal to that of the steel sheets.

In detail, in order to improve the strength of the weld metal, the pressing force needs to be controlled (adjusted) so as to satisfy the relationship of $0 \leq H_w - H_1 < 100$, where $H_w$ is the hardness of the welded portion after pressing and $H_1$ is the base metal hardness of the steel sheet having the lower hardness among the butted steel sheets.

More specifically, in the butt welding method according to the present disclosure, when the butt gap is denoted as G [mm], the wire supply amount ratio as X, and the pressing force when pressing the welded portion as P [kN], the pressing force P satisfies any of the following formulas (1) to (3) depending on the butt gap G.

When $0 \leq G < 0.20$,

$$1.1X(1.5G + 2.1) \leq P < 10X(2G + 0.5) \tag{1}$$

When $0.20 \leq G < 0.50$,

$$1.2X(2G + 1.8) \leq P < 5X(3G + 1.2) \tag{2}$$

When $0.50 \leq G$,

$$1.3X(3G + 1.1) \leq P < 1.2X(3.5G + 9.5) \qquad (3)$$

Alternatively, the pressing force P may satisfy any of the following formulas (4) to (6).

When $0 \leq G < 0.20$,

$$(1 + X/30) \times (1.5G + 2.5) \leq P < (1 + X/30) \times (15G + 18) \qquad (4)$$

When $0.20 \leq G < 0.50$,

$$(1 + X/20) \times (2G + 2.3) \leq P < (1 + X/20) \times (10G + 18) \qquad (5)$$

When $0.50 \leq G$,

$$(1 + X/10) \times (2.5G + 1.8) \leq P < (1 + X/10) \times (9G + 17) \qquad (6)$$

For example, when G = 0.10, either one or both of formulas (1) and (4) may be satisfied. Similarly, when $0.20 \leq G < 0.50$, either one or both of formulas (2) and (5) may be satisfied. When $0.50 \leq G$, either one or both of formulas (3) and (6) may be satisfied.

In the present disclosure, the pressing force P is the force applied to the excess weld metal of the weld bead by, for example, rolls 7 illustrated in FIG. 1, and is measured by a load cell or the like attached to the rolls 7 of the pressing device.

If the pressing force P is below the lower limit of any of formulas (1) to (3), hardening of the welded portion by pressing is insufficient. If the pressing force P exceeds the upper limit of any of formulas (1) to (3), the welded portion hardens excessively.

If the pressing force P is below the lower limit of any of formulas (4) to (6), hardening of the welded portion by pressing is insufficient. If the pressing force P exceeds the upper limit of any of formulas (4) to (6), the welded portion hardens excessively.

In formulas (1) to (3) and formulas (4) to (6), for example, in the case where the base metal is ferritic steel and the wire is a nickel alloy, the microstructure of the weld metal tends to be as follows: a $\alpha$ single-phase microstructure when $0 \leq G < 0.20$; a microstructure of $\alpha$ phase, $\gamma$ phase, or a mixture of both depending on welding conditions when $0.20 \leq G < 0.50$; and a $\gamma$ single-phase microstructure when $0.50 \leq G$.

The butt gap G is the size of the gap that occurs when the trailing end of the preceding steel sheet and the leading end of the succeeding steel sheet are butted, and is measured by a sensor or the like before welding. As the sensor, for example, a laser displacement meter may be used. As the butt gap G increases, the dilution in the weld metal by the base metal decreases, and accordingly the composition of the filler wire predominates. This causes the strength of the weld metal to be lower than that of the steel sheets.

It is therefore necessary to increase the pressing force P and thus increase the processing strain introduced into the weld metal as the butt gap G increases. Moreover, both the width and height of the weld bead increase as the wire supply amount ratio X increases, causing the volume of the pressed portion to increase, which requires a higher pressing force.

The butt gap G [mm] is preferably 0 or more and 2.00 or less, because burn through tends to occur if the butt gap G [mm] is more than 2.00. The pressing force P [kN] is preferably 2 or more. The pressing force P [kN] is preferably 20 or less.

The wire supply amount ratio X is the ratio b/a of the supplied volume b per unit weld length of the filler wire to the volume a per unit weld length of the gap at the butted portion between the steel sheets, as mentioned above.

Accordingly, X is calculated by the following formula (7) based on the geometric relationship of the weld metal amount required to fill the butt gap:

$$X = (F \times A)/(W \times G \times T) \qquad (7)$$

where F is the filler wire supply speed [mm/min], A is the cross-sectional area of the filler wire [mm$^2$], W is the welding speed [mm/min], G is the butt gap length [mm], and T is the average sheet thickness of the pair of steel sheets [mm].

In order to press the weld bead, it is desirable that the thickness of the weld portion is greater than the thickness of at least the thicker one of the steel sheets (also referred to as "having an excess weld metal" in the present disclosure). Such a condition (i.e., having an excess weld metal) is typically applied in butt welding.

Specifically, in order to effectively carry out the presently disclosed technique, it is desirable to satisfy $t_w > t_1$, where $t_w$ [mm] is the average thickness of the welded portion before pressing and $t_1$ [mm] is the sheet thickness of the thicker one of the butted sheets.

Moreover, since excessive pressing reduces the thickness of the base metal, the average thickness of the welded portion after pressing is preferably greater than or equal to the sheet thickness of the thicker one of the butted sheets.

In actual welding, the molten metal scatters from the molten weld pool due to spatter, plume, and the like, causing the wire supply amount ratio X to be less than that calculated from the above geometric relationship. In view of this, X is preferably 1.1 or more. Although no upper limit is placed on X, X is preferably less than 5.0, given that the cross-sectional shape of the welded portion may become asymmetrical about the center of the sheet thickness.

In the present disclosure, pressing after laser welding needs to be carried out in a state in which the welded portion is solidified. If the welded portion is at a temperature higher than or equal to the recrystallization temperature before solidification, dislocations due to processing are less likely to accumulate, and strain hardenability decreases. Therefore, the time from the end of laser irradiation to the start of pressing is, although not particularly limited, preferably 0.1 seconds or more.

In the butt welding method according to the present disclosure, any items not described in this specification may be in accordance with conventional methods.

EXAMPLES

Examples of the present disclosure will be described below.

For each of the steel sheets shown in Table 1, two steel sheets were butt-welded by a laser welder and a pressing device installed at the entrance of a line for continuously processing the steel sheets. Specifically, butt welding was performed under the welding conditions and pressing conditions shown in Table 1, to obtain a butt-welded member for each of the steel sheets shown in Table 1.

For laser welding, a disk laser with a wavelength of 1030 nm was used. As the filler wire, WEL® MIG625 (WEL is a registered trademark in Japan, other countries, or both) produced by Nippon Welding Rod Co., Ltd. and having a wire diameter of 0.9 mm was used.

The pressing device was arranged with flattening rolls facing the front and back surfaces of the welded portion formed by laser welding, and the welded portion was pressed while rotating the flattening rolls in the welding direction.

The butt gap G was determined by measuring the gap between the trailing end of the preceding steel sheet and the leading end of the succeeding steel sheet using a laser displacement meter before welding and taking the average in the range excluding regions from both transverse (i.e., width direction) ends of the steel sheets to 20 mm each toward the transverse center (i.e., inward). Specifically, the average of three points, namely, the positions 20 mm inward from both transverse ends of the steel sheets and the position at the center in the welding length direction, was taken. The reason for excluding the 20 mm regions inward from both transverse ends of the steel sheets is that the 20 mm regions from both transverse ends of the steel sheets correspond to the start and end points of the welded portion after welding, which are non-steady parts and may be removed in the production line.

The average thickness $t_w$ of the welded portion before pressing was determined by measuring the thickness of the welded portion using the laser displacement meter and taking the average of the thickness in the range excluding 20 mm regions from the start and end points of the welded portion toward the center (i.e., inward). The average of three points, namely, the positions 20 mm from both transverse ends of the steel sheets and the position at the center in the welding length direction, was taken.

The wire supply amount ratio X was calculated according to formula (7) above. Specifically, the wire supply amount ratio X was calculated according to formula (7) where the filler wire supply speed F and the welding speed W were preset values, the cross-sectional area A of the filler wire was calculated from the wire diameter measured using a caliper or the like, and the butt gap G and the average sheet thickness T of the pair of steel sheets were measured values.

The pressing force in the present disclosure is a value measured using a load cell or the like attached to the rolls 7 illustrated in FIG. 1. Specifically, the average of the measured values at three points, namely, the positions 20 mm from both transverse ends of the steel sheets and the position at the center in the welding length direction, was taken.

The welded portions obtained in this manner were each subjected to the following evaluations.

<Evaluation of Hardness of Welded Portion>

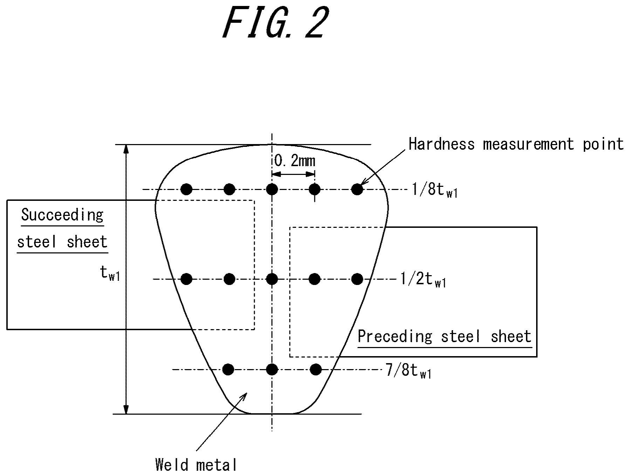

As illustrated in FIG. 2, the welded portion was cut in a direction perpendicular to the welding direction. The Vickers hardness HV0.2(10) in the weld metal at each of positions $1/8t_{w1}$, $1/2t_{w1}$, and $7/8t_{w1}$ where $t_{w1}$ is the maximum welded portion thickness on the cross-section was measured at 0.2 mm intervals from the center of the cross-section to both sides, and the average of all measurements was taken to be the hardness $H_w$ of the welded portion after pressing. For the hardness of the base metal, at a location 10 mm away from the boundary between the base metal and the weld metal, the Vickers hardness HV0.2(10) was measured at one point each at each of positions 1/8T, 1/2T, and 7/8T in the sheet thickness direction where T is the steel sheet thickness, and the average of the three points was calculated and the lower value among the butted steel sheets was taken as $H_1$. In Examples according to the present disclosure, $H_w - H_1$ was 0 or more and less than 100. In Comparative Examples, $H_w - H_1$ was outside this range. For welded portions produced under the same welding conditions, HV0.2(10) was measured at each position in the same manner as above, and the average of all measurements was taken to be the hardness Hs of the welded portion before pressing.

<Sheet Passage Test>

Each weld bead was passed through a cold rolling mill with a rolling tension of 150 MPa and a reduction ratio relative to the steel sheet thickness of 50 %. The sample was evaluated as pass (○) if it did not fracture at the weld metal, and evaluated as fail (×) if it fractured at the weld metal.

The evaluation results are shown alongside the welding conditions in Table 1.

[Table 1]

Table 1

| Test No. | Steel sheet | | | | Butt welding conditions | | | | | | | | | | | | | Evaluation of hardness of welded portion | | | Sheet passage test result | Remarks |
|---|---|---|---|---|---|---|---|---|---|---|---|---|---|---|---|---|---|---|---|---|---|---|
| | Si content [mass%] | C content [mass%] | Hardness H1 [HV0.2] | Sheet thickness t1 [mm] | Laser power [kW] | Welding speed [m/min] | Wire supply speed [m/min] | Butt gap G [mm] | Wire supply amount ratio X | tw [mm] | Pressing force P [kN] | Formulas P1, P2 applied | Formula P1(*1) lower limit [kN] | Formula P1(*1) upper limit [kN] | Formula P2(*2) lower limit [kN] | Formula P2(*2) upper limit [kN] | Hardness before pressing Hs [HV0.2] | Hardness after pressing Hw [HV0.2] | Hw-H1 | | |
| 1 | 3.0 | 0.010 | 220 | 2.0 | 10 | 4.0 | 2.0 | 0.10 | 1.6 | 2.4 | 10 | (1),(4) | 4.0 | 11.2 | 2.8 | 20.5 | 190 | 230 | 10 | O | Example |
| 2 | 3.0 | 0.010 | 220 | 2.0 | 10 | 4.0 | 2.0 | 0.10 | 1.6 | 2.4 | 0 | (1),(4) | 4.0 | 11.2 | 2.8 | 20.5 | 190 | 190 | -30 | × | Comparative Example |
| 3 | 3.0 | 0.005 | 220 | 2.0 | 10 | 4.0 | 6.0 | 0.30 | 1.6 | 2.4 | 10 | (2),(5) | 4.6 | 16.8 | 3.1 | 22.7 | 185 | 225 | 5 | O | Example |
| 4 | 3.0 | 0.010 | 220 | 2.0 | 10 | 4.0 | 6.0 | 0.50 | 1.6 | 2.4 | 2 | (2),(5) | 4.6 | 16.8 | 3.5 | 24.9 | 180 | 200 | -20 | × | Comparative Example |
| 5 | 3.0 | 0.010 | 220 | 2.0 | 10 | 4.0 | 10.0 | 0.50 | 1.6 | 2.4 | 15 | (3),(6) | 5.4 | 21.6 | 3.5 | 24.9 | 180 | 240 | 20 | O | Example |
| 6 | 3.0 | 0.010 | 220 | 2.0 | 10 | 4.0 | 10.0 | 0.15 | 1.6 | 2.4 | 25 | (3),(6) | 5.4 | 21.6 | 2.9 | 21.3 | 180 | 330 | 110 | × | Comparative Example |
| 7 | 3.0 | 0.010 | 220 | 2.0 | 10 | 4.0 | 3.0 | 0.15 | 1.6 | 2.4 | 18 | (1),(4) | 4.1 | 12.7 | 2.9 | 21.3 | 195 | 260 | 40 | O | Example |
| 8 | 3.0 | 0.010 | 220 | 2.0 | 10 | 4.0 | 3.0 | 0.15 | 1.6 | 2.4 | 2 | (1),(4) | 4.1 | 12.7 | 3.0 | 21.8 | 195 | 200 | -20 | × | Comparative Example |
| 9 | 2.5 | 0.010 | 200 | 1.8 | 8 | 4.0 | 3.5 | 0.25 | 1.2 | 2.0 | 11 | (2),(5) | 3.4 | 12.1 | 3.0 | 21.8 | 185 | 260 | 60 | O | Example |
| 10 | 2.5 | 0.020 | 200 | 1.8 | 8 | 4.0 | 3.5 | 0.25 | 1.2 | 2.1 | 4 | (2),(5) | 3.4 | 12.1 | 3.0 | 21.8 | 185 | 205 | 5 | O | Example |
| 11 | 3.5 | 0.010 | 230 | 2.6 | 8 | 4.0 | 19.0 | 0.60 | 1.9 | 3.0 | 7 | (3),(6) | 7.3 | 27.0 | 3.9 | 26.7 | 215 | 235 | 5 | O | Example |
| 12 | 3.5 | 0.070 | 230 | 2.6 | 8 | 4.0 | 19.0 | 0.60 | 1.9 | 3.0 | 13 | (3),(6) | 7.3 | 27.0 | 3.9 | 26.7 | 215 | 280 | 50 | O | Example |
| 13 | 4.5 | 0.010 | 260 | 2.0 | 12 | 4.0 | 7.0 | 0.30 | 1.4 | 3.1 | 8 | (2),(5) | 4.1 | 15.0 | 3.1 | 22.5 | 220 | 275 | 15 | O | Example |
| 14 | 3.0 | 0.010 | 220 | 2.0 | 10 | 8.0 | 10.0 | 0.30 | 1.3 | 2.4 | 8 | (2),(5) | 3.8 | 13.9 | 3.1 | 22.4 | 200 | 225 | 5 | O | Example |
| 15 | 3.0 | 0.010 | 230 | 5.0 | 10 | 2.0 | 6.0 | 0.30 | 1.3 | 5.3 | 8 | (2),(5) | 3.7 | 13.4 | 3.1 | 22.3 | 185 | 310 | 80 | O | Example |
| 16 | 3.5 | 0.010 | 230 | 2.2 | 10 | 4.0 | 5.3 | 0.20 | 1.9 | 2.6 | 20 | (2),(5) | 5.1 | 17.4 | 3.0 | 21.9 | 200 | 235 | 5 | O | Example |
| 17 | 3.5 | 0.010 | 230 | 2.2 | 10 | 4.0 | 5.3 | 0.20 | 1.9 | 2.6 | 4 | (2),(5) | 5.0 | 17.1 | 3.0 | 21.9 | 200 | 235 | 5 | O | Example |
| 18 | 3.5 | 0.005 | 230 | 2.4 | 8 | 8.0 | 28.5 | 0.50 | 1.9 | 3.0 | 5 | (3),(6) | 6.5 | 26.2 | 3.6 | 25.7 | 180 | 230 | 0 | O | Example |
| 19 | 2.0 | 0.010 | 200 | 6.0 | 10 | 2.0 | 18.0 | 0.50 | 1.9 | 6.5 | 15 | (3),(6) | 6.5 | 26.2 | 3.6 | 25.7 | 190 | 250 | 50 | O | Example |
| 20 | 3.0 | 0.010 | 230 | 1.8 | 10 | 4.0 | 10.8 | 0.50 | 1.9 | 2.2 | 24 | (3),(6) | 6.5 | 26.2 | 3.6 | 25.7 | 180 | 315 | 85 | O | Example |
| 21 | 4.0 | 0.005 | 230 | 2.0 | 10 | 4.0 | 19.0 | 0.80 | 1.9 | 2.5 | 5 | (3),(6) | 8.6 | 28.0 | 4.5 | 28.8 | 180 | 235 | 5 | O | Example |
| 22 | 4.0 | 0.005 | 230 | 2.0 | 10 | 4.0 | 19.0 | 0.80 | 1.9 | 2.5 | 27 | (3),(6) | 8.8 | 28.6 | 4.5 | 28.9 | 180 | 310 | 80 | O | Example |
| 23 | 3.0 | 0.005 | 220 | 1.6 | 8 | 4.0 | 3.2 | 0.20 | 1.6 | 2.0 | 20 | (2),(5) | 4.2 | 14.3 | 2.9 | 21.6 | 205 | 300 | 80 | O | Example |
| 24 | 3.0 | 0.005 | 220 | 1.6 | 8 | 4.0 | 3.2 | 0.20 | 1.6 | 2.0 | 4 | (2),(5) | 4.2 | 14.4 | 2.9 | 21.6 | 205 | 225 | 5 | O | Example |
| 25 | 3.0 | 0.005 | 230 | 2.0 | 8 | 4.0 | 13.0 | 0.80 | 1.6 | 2.3 | 6 | (3),(6) | 7.3 | 23.6 | 4.4 | 28.1 | 180 | 235 | 5 | O | Example |
| 26 | 3.5 | 0.005 | 230 | 2.2 | 10 | 4.0 | 16.0 | 0.80 | 2.0 | 2.7 | 27 | (3),(6) | 7.2 | 23.5 | 4.4 | 28.0 | 180 | 250 | 20 | O | Example |
| 27 | 3.5 | 0.010 | 230 | 2.2 | 10 | 4.0 | 8.3 | 0.30 | 1.6 | 2.8 | 15 | (2),(5) | 5.8 | 21.0 | 3.2 | 23.1 | 180 | 240 | 10 | O | Example |
| 28 | 3.5 | 0.010 | 230 | 2.2 | 10 | 4.0 | 4.5 | 0.20 | 1.6 | 2.6 | 24 | (2),(5) | 4.2 | 14.4 | 2.9 | 21.6 | 205 | 340 | 110 | × | Comparative Example |
| 29 | 3.5 | 0.010 | 230 | 2.0 | 10 | 4.0 | 4.5 | 0.20 | 1.6 | 2.6 | 2 | (2),(5) | 4.2 | 14.4 | 2.9 | 21.6 | 205 | 210 | -20 | × | Comparative Example |
| 30 | 4.0 | 0.005 | 230 | 2.0 | 10 | 4.0 | 19.0 | 0.80 | 1.6 | 2.6 | 30 | (3),(6) | 7.3 | 23.6 | 4.4 | 28.1 | 180 | 355 | 125 | × | Comparative Example |
| 31 | 4.0 | 0.005 | 230 | 2.0 | 10 | 4.0 | 19.0 | 0.80 | 1.6 | 2.6 | 3 | (3),(6) | 7.3 | 23.6 | 4.4 | 28.1 | 180 | 190 | -40 | × | Comparative Example |
| 32 | 3.5 | 0.010 | 230 | 2.2 | 10 | 4.0 | 5.3 | 0.20 | 1.9 | 2.7 | 2 | (2),(5) | 5.0 | 17.1 | 3.0 | 21.9 | 200 | 205 | -25 | × | Comparative Example |
| 33 | 3.5 | 0.010 | 240 | 2.2 | 10 | 4.0 | 5.3 | 0.20 | 1.9 | 2.7 | 25 | (2),(5) | 5.0 | 17.1 | 3.0 | 21.9 | 200 | 235 | -5 | × | Comparative Example |
| 34 | 3.5 | 0.010 | 230 | 2.2 | 10 | 4.0 | 5.3 | 0.80 | 1.9 | 2.7 | 30 | (3),(6) | 8.6 | 28.0 | 4.5 | 28.8 | 180 | 355 | 125 | × | Comparative Example |
| 35 | 3.5 | 0.010 | 230 | 2.2 | 10 | 4.0 | 5.3 | 0.80 | 1.9 | 2.7 | 3 | (3),(6) | 8.6 | 28.0 | 4.5 | 28.8 | 180 | 185 | -45 | × | Comparative Example |

*1. Formula P1

When $0 \leq G < 0.20$,
$$1.1X(1.5G + 2.1) \leq P < 10X(2G + 0.5) \quad (1)$$
When $0.20 \leq G < 0.50$,
$$1.2X(2G + 1.8) \leq P < 5X(3G + 1.2) \quad (2)$$
When $0.50 \leq G$,
$$1.3X(3G + 1.1) \leq P < 1.2X(3.5G + 9.5) \quad (3)$$

*2. Formula P2

When $0 \leq G < 0.20$,
$$(1 + X/30) \times (1.5G + 2.5) \leq P < (1 + X/30) \times (15G + 18) \quad (4)$$
When $0.20 \leq G < 0.50$,
$$(1 + X/20) \times (2G + 2.3) \leq P < (1 + X/20) \times (10G + 18) \quad (5)$$
When $0.50 \leq G$,
$$(1 + X/10) \times (2.5G + 1.8) \leq P < (1 + X/10) \times (5G + 17) \quad (6)$$

As can be seen from these results, the butt-welded members with the pressing force set to satisfy the conditions according to the present disclosure (Examples) were pass (○) in all of the evaluations.

REFERENCE SIGNS LIST

1   preceding steel sheet
2   succeeding steel sheet
3   butted portion (butt gap)
4   filler wire
5   laser
6   weld bead
7   pressing roll

**Claims**

1.  A butt welding method comprising, upon continuously passing a plurality of steel sheets through a processing line, butting a trailing end of a preceding steel sheet and a leading end of a succeeding steel sheet at an entry side of the processing line, then irradiating a butted portion with a laser while supplying a filler wire to the butted portion so as to weld the steel sheets by melting and solidifying the filler wire, and pressing a solidified welded portion,
    wherein a pressing force during the pressing is controlled to satisfy a relationship of $0 \leq H_w - H_1 < 100$, where $H_w$ is hardness of the welded portion after the pressing and $H_1$ is base metal hardness of a steel sheet having lower hardness among the butted steel sheets.

2.  The butt welding method according to claim 1, wherein the pressing force during the pressing, denoted as P in kN, satisfies any of the following formulas (1) to (3) depending on a butt gap G in mm of the butted portion and a wire supply amount ratio X with respect to a gap at the butted portion,

    when $0 \leq G < 0.20$,

    $$1.1X(1.5G + 2.1) \leq P < 10X(2G + 0.5) \tag{1}$$

    when $0.20 \leq G < 0.50$,

    $$1.2X(2G + 1.8) \leq P < 5X(3G + 1.2) \tag{2}$$

    when $0.50 \leq G$,

    $$1.3X(3G + 1.1) \leq P < 1.2X(3.5G + 9.5) \tag{3}.$$

3.  The butt welding method according to claim 1 or 2, wherein the pressing force during the pressing, denoted as P in kN, satisfies any of the following formulas (4) to (6) depending on a butt gap G in mm of the butted portion and a wire supply amount ratio X with respect to a gap at the butted portion,

    when $0 \leq G < 0.20$,

    $$(1 + X/30) \times (1.5G + 2.5) \leq P < (1 + X/30) \times (15G + 18) \tag{4}$$

    when $0.20 \leq G < 0.50$,

    $$(1 + X/20) \times (2G + 2.3) \leq P < (1 + X/20) \times (10G + 18) \tag{5}$$

    when $0.50 \leq G$,

$$(1 + X/10) \times (2.5G + 1.8) \le P < (1 + X/10) \times (9G + 17) \qquad (6).$$

4. The butt welding method according to any one of claims 1 to 3, wherein one or both of a ferritic filler wire and an austenitic filler wire are used as the filler wire.

# FIG. 1

Welding direction

Rolling direction

# FIG. 2

Hardness measurement point

0.2mm

$1/8t_{w1}$

$1/2t_{w1}$

$7/8t_{w1}$

Succeeding steel sheet

$t_{w1}$

Preceding steel sheet

Weld metal

## INTERNATIONAL SEARCH REPORT

| | International application No. |
|---|---|
| | **PCT/JP2024/033590** |

### A. CLASSIFICATION OF SUBJECT MATTER

***B23K 26/21*** (2014.01)i
FI: B23K26/21 F; B23K26/21 W

According to International Patent Classification (IPC) or to both national classification and IPC

### B. FIELDS SEARCHED

Minimum documentation searched (classification system followed by classification symbols)

B23K26/21

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2013-27934 A (NIPPON STEEL & SUMITOMO METAL CORPORATION) 07 February 2013 (2013-02-07) paragraphs [0063]-[0064], [0071]-[0078], fig. 9 | 1 |
| Y | | 4 |
| A | | 2-3 |
| Y | JP 7215649 B1 (JFE STEEL CORPORATION) 31 January 2023 (2023-01-31) paragraph [0035] | 4 |
| A | | 1-3 |
| A | JP 2015-30014 A (TADA DENKI KK) 16 February 2015 (2015-02-16) entire text, all drawings | 1-4 |
| A | JP 2013-176809 A (NIPPON STEEL & SUMITOMO METAL CORPORATION) 09 September 2013 (2013-09-09) entire text, all drawings | 1-4 |

| ✓ Further documents are listed in the continuation of Box C. | ✓ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 October 2024** | **22 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT

| International application No. |
| --- |
| **PCT/JP2024/033590** |

### C.    DOCUMENTS CONSIDERED TO BE RELEVANT

| Category* | Citation of document, with indication, where appropriate, of the relevant passages | Relevant to claim No. |
| --- | --- | --- |
| A | JP 2007-175774 A (POSCO) 12 July 2007 (2007-07-12)<br>entire text, all drawings | 1-4 |

Form PCT/ISA/210 (second sheet) (July 2022)

**INTERNATIONAL SEARCH REPORT**
Information on patent family members

International application No.

**PCT/JP2024/033590**

| Patent document cited in search report | | | Publication date (day/month/year) | Patent family member(s) | | | Publication date (day/month/year) |
|---|---|---|---|---|---|---|---|
| JP | 2013-27934 | A | 07 February 2013 | CN | 101610872 | A | |
| | | | | page 17, line 22 - page 18, line 5, page 19, line 15 - page 20, line 18, fig. 9 | | | |
| | | | | KR | 10-2009-0118946 | A | |
| JP | 7215649 | B1 | 31 January 2023 | EP | 4393632 | A1 | |
| | | | | paragraph [0036] | | | |
| | | | | CN | 117917974 | A | |
| JP | 2015-30014 | A | 16 February 2015 | (Family: none) | | | |
| JP | 2013-176809 | A | 09 September 2013 | (Family: none) | | | |
| JP | 2007-175774 | A | 12 July 2007 | CN | 1990155 | A | |
| | | | | entire text, all drawings | | | |

Form PCT/ISA/210 (patent family annex) (July 2022)

**EP 4 732 985 A1**

**Patent documents cited in the description**

- JP 4486639 B
- JP 2948843 B